# EUROPÄISCHE PATENTSCHRIFT

(11) **EP 2 898 805 B1**
(45) Veröffentlichungstag und Bekanntmachung des Hinweises auf die Patenterteilung: **29.06.2016**
(21) Anmeldenummer: 15152477.4
(22) Anmeldetag: 26.01.2015
(51) Int. Cl.: A47J 36/16, A47J 27/14, F16J 15/46

(54) **TIEGELTRENNVORRICHTUNG UND BAUGRUPPE**
PAN SEPARATION DEVICE AND ASSEMBLY
DISPOSITIF DE SÉPARATION DE CREUSET ET ENSEMBLE

(30) Priorität: 24.01.2014 DE 102014100844
(43) Veröffentlichungstag der Anmeldung: 29.07.2015
(73) Patentinhaber: FRIMA International AG, 9435 Heerbrugg (CH)
(72) Erfinder: Leininger Dr., Philippe, 6800 Mulhouse (FR); Lingenheil, Markus, 79206 Breisach / Oberrimsingen (DE); Kistler, Simone, 79410 Badenweiler (DE); Spahlholz, Kevin, 79415 Bad Bellingen / Bamlach (DE)
(74) Vertreter: Prinz & Partner mbB

(56) Entgegenhaltungen:
- EP-A1- 2 649 914
- DE-A1-102004 001 221

## Beschreibung

Die Erfindung betrifft eine Tiegeltrennvorrichtung zum Unterteilen eines tiegelartigen Garbehälters in unterschiedliche Garbereiche sowie eine Baugruppe mit einem tiegelartigen Garbehälter und einer solchen Tiegeltrennvorrichtung.

Gargeräte mit tiegelartigen Garbehältern werden beispielsweise in der Großgastronomie oder in Restaurants eingesetzt, um große Speisenmengen zuzubereiten. Aus dem Stand der Technik ist bekannt, dass solche tiegelartigen Garbehälter in unterschiedliche Garzonen aufgeteilt werden können, die separat beheizt werden können. Des Weiteren kann eine Tiegeltrennvorrichtung in den Garbehälter eingesetzt werden, die den Garbehälter in mehrere voneinander getrennte Garbereiche, die jeweils einzeln beheizt werden können, unterteilt. Dadurch können in einem Garbehälter verschiedene Speisen, insbesondere mit unterschiedlichen Temperaturen, zubereitet werden.

Es sind Tiegeltrennvorrichtungen bekannt, die in den Garbehälter eingesetzt und in diesem mechanisch fixiert werden. Dies erfolgt beispielsweise durch eine mechanische Spannvorrichtung, die sich am oberen, freien Rand des Garbehälters verklemmt oder die Tiegeltrennvorrichtung gegen die Innenwand des Garbehälters verklemmt (siehe EP-A-2 649 914).

Nachteilig an diesen Tiegeltrennvorrichtungen ist, dass diese nur mit einem bestimmten Garbehälter zusammenwirken können. Da die Abdichtungen aufgrund der thermischen Längenänderungen nur in sehr engen Toleranzbereichen abdichten, sind die Anforderungen an die Fertigungs- und Einbaugenauigkeit sehr groß, um eine zuverlässige Abdichtung der Garzonen zueinander zu erreichen. Zudem ist eine in allen Betriebs- und Temperaturzuständen hoch elastische, mehrere Millimeter ausgleichende zusätzliche Dichtung erforderlich.

Aufgabe der Erfindung ist es, eine Tiegeltrennvorrichtung bereitzustellen, die variabler einsetzbar ist, indem diese in verschiedene, auch größeren Fertigungstoleranzen unterliegenden Garbehälter eingesetzt werden kann und eine einfache und zuverlässige Abdichtung der Garbereiche auch bei ungenauem Einbau und allen möglichen Anwendungsfällen und Temperaturbereichen ermöglicht. Aufgabe der Erfindung ist es des Weiteren, eine Baugruppe mit einem tiegelartigen Garbehälter und einer solchen Tiegeltrennvorrichtung bereitzustellen.

Zur Lösung der Aufgabe ist eine Tiegeltrennvorrichtung zum Unterteilen eines tiegelartigen Garbehälters in unterschiedliche Garzonen vorgesehen, mit einem plattenförmigen Grundkörper, mindestens einer Dichtung, die einem Rand des Grundkörpers zugeordnet ist und ein abgeschlossenes Innenvolumen aufweist, und einer Druckbeaufschlagungsvorrichtung, die mit der Dichtung verbunden ist. Die Tiegeltrennvorrichtung wird zum Unterteilen des Garbehälters in die gewünschte Position in den Garbehälter eingesetzt. Anschließend wird die Dichtung durch die Druckbeaufschlagungsvorrichtung mit Druck beaufschlagt. Die Dichtung wird dadurch so weit aufgeblasen, bis sie nach außen über den Rand des Grundkörpers vorsteht und an der Umfangswand und am Boden des Garbehälters anliegt. Dadurch wird die Tiegeltrennvorrichtung durch die Dichtung im Garbehälter verklemmt, so dass sie den Garbehälter zuverlässig in zwei vollständig voneinander getrennte Garbereiche unterteilt. Die Dichtung legt sich durch den Überdruck an die Innenwand des Garbehälters an, so dass gleichzeitig eine Abdichtung der Garbereiche zueinander erfolgt. Da die Fixierung der Tiegeltrennvorrichtung durch die unter Druck stehende Dichtung erfolgt, sind am Garbehälter keine Vorkehrungen erforderlich, um die Tiegeltrennvorrichtung zu fixieren und abzudichten. Außerdem ist durch die Dichtung ein Ausgleich von Unebenheiten am Boden oder der Umfangswand des Garbehälters und ebenso ein Ausgleich von üblichen Fertigungstoleranzen und thermischen Längenausdehnungen im kompletten Anwendungstemperaturbereich möglich. Zudem kann die Tiegeltrennvorrichtung in unterschiedlich hohen Garbehältern eingesetzt werden, da diese nicht am oberen Rand des Garbehälters angreifen muss.

Die Dichtung kann beispielsweise ein Schlauch sein, der am Rand des Grundkörpers angeordnet ist. Ein solcher Schlauch kann so am Grundkörper positioniert werden, dass diese über längere Strecken am Rand des Grundkörpers verläuft, so dass über den gesamten Rand des Grundkörpers eine Abdichtung der Tiegeltrennvorrichtung möglich ist.

Vorzugsweise ist der Grundkörper rechteckig, und die Dichtung ist an drei Seiten des Grundkörpers angeordnet. Die Dichtung verläuft an einem dem Boden des Garbehälters zugeordneten Rand sowie an zwei jeweils an diesen Rand angrenzenden Rändern, die jeweils in eingesetztem Zustand in den Garbehälter an der Seitenwand bzw. der Umfangswand des Garbehälters anliegen. Somit ist umlaufend mit einer Dichtung eine zuverlässige Abdichtung der Tiegeltrennvorrichtung und eine Unterteilung des Garbehälters in verschiedene Garbereiche möglich.

Die Dichtung kann auf verschiedene Weisen mit Überdruck beaufschlagt werden. Es ist beispielsweise möglich, dass die Druckbeaufschlagungsvorrichtung eine Pumpe ist, die ein Fluid, beispielsweise Luft, in die Dichtung pumpt, so dass in dieser ein Überdruck entsteht. Dies ermöglicht eine einfache Beaufschlagung der Dichtung mit Überdruck. Zudem ist durch die Pumpe, beispielsweise bei Temperaturveränderungen und den daraus resultierenden Druckänderungen, eine einfache nachträgliche Anpassung des Überdrucks in der Dichtung möglich. Es kann auch ein Überdrucksensor vorgesehen sein, und die Pumpe wird in Abhängigkeit vom gemessenen Überdruck in der Dichtung gesteuert, so dass ein gleichmäßig hoher Überdruck in der Dichtung sichergestellt ist. Die Druckbeaufschlagungsvorrichtung kann zudem ein Fluidbehälter aufweisen, von dem aus das Fluid in die Dichtung gepumpt wird, beispielsweise, um ein Fluid mit geringerer Kompressibilität als Luft zu verwenden.

Alternativ kann die Druckbeaufschlagungsvorrichtung auch ein kompressibler Vorratsbehälter sein, der mit einem Fluid gefüllt ist, z.B. Wasser. Durch Zusammendrücken dieses Vorratsbehälters wird das darin gelagerte Fluid in die Dichtung gedrückt, so dass diese durch das Fluid mit einem Überdruck beaufschlagt wird. In dieser Ausführungsform weist die Dichtung gemeinsam mit der Druckbeaufschlagungsvorrichtung vorzugsweise ein geschlossenes Fluidvolumen auf, so dass von außen kein Fluid zugeführt werden muss. Dadurch ist eine Druckbeaufschlagung der Dichtung unabhängig vom Medium, das die Tiegeltrennvorrichtung umgibt, möglich.

Es ist auch denkbar, dass zur Druckbeaufschlagung die Wärmeausdehnung eines Mediums genutzt wird, die im Dichtungssystem enthalten ist. Dadurch wird die Tiegeltrennvorrichtung automatisch dicht innerhalb des Tiegels verspannt, wenn die Tiegeltrennvorrichtung (und damit das in ihr enthaltene Medium) erwärmt wird.

Die Dichtung ist beispielsweise mit einem insbesondere inkompressiblen Fluid, insbesondere einem Öl, insbesondere Glycerin gefüllt. Vorzugsweise wird ein Fluid verwendet, das an die üblichen Anwendungstemperaturen angepasst ist und die verwendeten Dichtungsmaterialien nicht angreift. Glycerin oder Öle mit ähnlichen Eigenschaften weist einen deutlich höheren Siedepunkt als beispielsweise Wasser auf, so dass diese über den gesamten Bereich der Anwendungstemperatur gleichbleibende Stoffeigenschaften aufweisen. Zudem greifen diese die Dichtungen nicht an.

Um den Druck aus der Dichtung abzulassen, kann ein Ablassventil vorgesehen sein. Durch dieses kann der Druck in der Dichtung reduziert werden, um die Tiegeltrennvorrichtung aus dem Garbehälter entnehmen zu können oder um, beispielsweise bei ansteigenden Temperaturen im Garbehälter, ein zu großes Ansteigen des Druckes in der Dichtung zu verhindern. Das Ablassventil kann direkt der Dichtung zugeordnet sein. Es ist aber auch möglich, dass das Ablassventil der Druckbeaufschlagungsvorrichtung zugeordnet ist.

Die Dichtung kann einteilig ausgebildet sein, so dass die Dichtung in Umfangsrichtung gleichmäßig aufgepumpt wird.

Alternativ ist es auch möglich, dass die Dichtung mehrteilig ausgebildet ist. Dadurch können die verschiedenen Teile der Dichtung getrennt aufgepumpt bzw. mit einem Überdruck beaufschlagt werden, so dass eine bessere Anpassung und Fixierung der Tiegeltrennvorrichtung im Garbehälter möglich ist. Die Teildichtungen können zudem verschiedene Dimensionen aufweisen, so dass diese in aufgeblasenem Zustand unterschiedlich weit über den Grundkörper herausragen.

An der Dichtung können außenseitig Formteile, insbesondere als Eckteile ausgebildete Formteile, insbesondere aus Kunststoff, vorgesehen sein. Diese Formteile sind beispielsweise an den am schwierigsten abzudichtenden Ecken oder Kanten zwischen dem Garbehälterboden und dem jeweiligen Randbereich vorgesehen und an die Eckenform des Garbehälters angepasst. Die Formteile können beispielsweise in die Dichtung integriert, beispielsweise einvulkanisiert, an dieser angeformt oder auf diese aufgeklebt sein. Ein solches Formteil wird durch den Druck der benachbarten und/oder dem Formteil hinterlegte Druckkammer oder durch die hinter dem Formteil durchgeführte, druckbeaufschlagte Dichtung in die Ecke oder in die Kante des Garberhälters gedrückt.

Insbesondere ist es möglich, dass zwei an gegenüberliegenden Seiten des Grundkörpers vorgesehene seitliche Dichtungen sowie eine Bodendichtung vorgesehen sind. Die seitlichen Dichtungen liegen in aufgeblasenem Zustand jeweils an die Umfangswand des Garbehälters an bzw. passen sich dieser an. Ebenso ist mit der Bodendichtung, auch bei unebenem Boden des Garbehälters, eine Anpassung und somit eine zuverlässige Anpassung und Abdichtung möglich.

Die einzelnen Teile der Dichtung können von einer gemeinsamen Druckbeaufschlagungsvorrichtung aufgepumpt werden. In einer solchen Ausführungsform kann zwischen den seitlichen Dichtungen und der Bodendichtung eine Drossel vorgesehen sein, so dass die Bodendichtung zeitversetzt zu den seitlichen Dichtungen aufgeblasen wird. Dadurch ist es möglich, dass die Tiegeltrennvorrichtung erst mit den seitlichen Dichtungen an der Umfangswand bzw. den Seitenwänden des Garbehälters verklemmt und fixiert wird, bevor die Bodendichtung aufgeblasen wird. Würde die Bodendichtung gleichzeitig mit den seitlichen Dichtungen aufgeblasen, würde die Tiegeltrennvorrichtung bei fehlendem Gegendruck durch die sich aufblasende Bodendichtung nach oben gedrückt werden, bevor eine ausreichende Fixierung der Tiegeltrennvorrichtung an der Umfangswand des Garbehälters erfolgt ist. Dies könnte eine ausreichende Abdichtung durch die Bodendichtung gefährden. Alternativ ist es auch möglich, dass für die einzelnen Teile der Dichtung jeweils eine separate Druckbeaufschlagungsvorrichtung oder eine Steuerung zur Verteilung des Druckes in den Teildichtungen vorgesehen ist.

In einer weiteren Ausführungsform sind zwei parallele Dichtungen vorgesehen, die insbesondere jeweils an drei Seiten des Grundkörpers angeordnet sind. Die Dichtungen verlaufen in zwei parallelen Ebenen und liegen in einer Draufsicht senkrecht zur Ebene des Grundkörpers übereinander. Eine solche doppelte Dichtung hat mehrere Vorteile. Zum einen ist durch eine doppelte Abdichtung eine redundante Fixierung und Abdichtung der Tiegeltrennvorrichtung geschaffen, so dass auch bei einem Defekt an einer der beiden Dichtungen eine zuverlässige Fixierung und Abdichtung gewährleistet ist. Zum anderen kann die Tiegeltrennvorrichtung beispielsweise so auf einer Ablassöffnung im Boden oder an der Umfangswand des Garbehälters positioniert werden, dass die Ablauföffnung zwischen den beiden Dichtungen liegt. Bei mit Überdruck beaufschlagten Dichtungen ist somit die Ablassöffnung von den Garbereichen getrennt. Durch die Tiegeltrennvorrichtung werden also nicht nur zwei vollständig abgedichtete Garbereiche gebildet, sondern es kann zusätzlich eine Ablauföffnung abgedichtet werden. Um das Gargut aus dem jeweiligen Garbereich abzulassen, kann in der dem jeweiligen Garbereich zugeordneten Dichtung der Druck abgelassen werden, so dass das Gargut aus diesem Garbereich zur Ablauföffnung strömen kann. Um aus dem jeweils anderen Garbereich das Gargut abzulassen, kann die erste Dichtung wieder aufgeblasen und der Druck in der anderen Dichtung abgelassen werden. Somit ist am Garbehälter keine zusätzliche Einrichtung erforderlich, um die Ablauföffnung abzudichten.

In dieser Ausführungsform ist vorzugsweise für jede Dichtung jeweils eine Druckbeaufschlagungsvorrichtung vorgesehen, so dass der Druck in den beiden Dichtungen vollständig getrennt voneinander gesteuert werden kann.

Erfindungsgemäß ist des Weiteren eine Baugruppe mit einem tiegelartigen Garbehälter und einer solchen Tiegeltrennvorrichtung vorgesehen, wobei zwei parallele Dichtungen vorgesehen sind und der Durchmesser einer Ablauföffnung kleiner ist als der Abstand der beiden Dichtungen voneinander. Somit kann die Ablauföffnung zwischen den beiden Dichtungen liegen, so dass die Ablauföffnung bei aufgeblasenen Dichtungen vollständig abgedichtet ist.

Weitere Vorteile und Merkmale finden sich in der nachfolgenden Beschreibung in Verbindung mit den beigefügten Zeichnungen. In diesen zeigen:
- Figur 1 eine perspektivische Ansicht einer ersten Ausführungsform einer erfindungsgemäßen Tiegeltrennvorrichtung,
- Figur 2 eine Schnittansicht durch die Tiegeltrennvorrichtung aus Figur 1,
- Figur 3 eine Schnittansicht durch eine erfindungsgemäße Baugruppe mit einem Garbehälter und der Tiegeltrennvorrichtung aus Figur 1,
- Figur 4 eine zweite Ausführungsform der Tiegeltrennvorrichtung,
- Figur 5 eine Schnittansicht einer ersten Ausführungsform einer Dichtung für eine erfindungsgemäße Tiegeltrennvorrichtung,
- Figur 6 eine Schnittansicht einer zweiten Ausführungsform einer Dichtung für eine erfindungsgemäße Tiegeltrennvorrichtung,
- Figur 7 eine alternative Ausführungsform einer Tiegeltrennvorrichtung,
- Figur 8 eine alternative Ausführungsform einer Druckbeaufschlagungsvorrichtung für eine Tiegeltrennvorrichtung,
- Figur 9 eine weitere Ausführungsform einer Druckbeaufschlagungsvorrichtung für eine Tiegeltrennvorrichtung,
- Figur 10 eine dritte Ausführungsform einer erfindungsgemäßen Tiegeltrennvorrichtung,
- Figur 11 eine zweite erfindungsgemäße Baugruppe mit einem Garbehälter und der Tiegeltrennvorrichtung aus Figur 10,
- Figur 12 eine Schnittansicht durch die Baugruppe aus Figur 11 im Bereich einer Ablauföffnung, und
- Figur 13 eine zweite Schnittansicht durch die Baugruppe aus Figur 11.

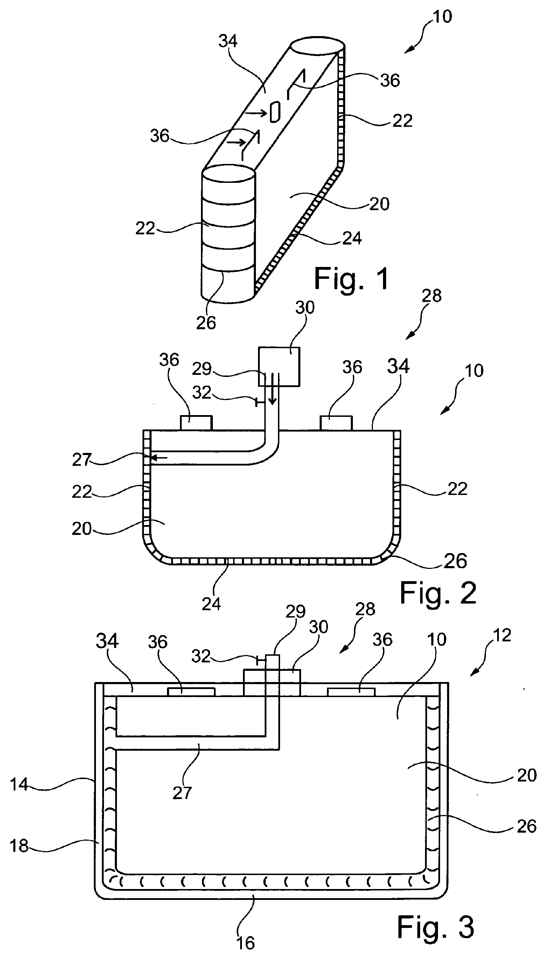

In den Figuren 1 und 2 ist eine Tiegeltrennvorrichtung 10 für eine in Figur 3 gezeigte Baugruppe 12 gezeigt. Die Baugruppe 12 weist neben der Tiegeltrennvorrichtung 10 einen tiegelartigen Garbehälter 14 auf, der einen flachen Boden 16 sowie eine Umfangswand 18 aufweist. Abhängig von der Form des Garbehälters 14 kann die Umfangswand 18 in mehrere Seitenwände unterteilt sein, beispielsweise bei einem rechteckigen Boden 16.

Die Tiegeltrennvorrichtung 10 wird so in den Garbehälter 14 eingesetzt und in diesem fixiert, dass die Tiegeltrennvorrichtung 10 dichtend an der Umfangswand 18 sowie am Boden 16 anliegt und somit den Garbehälter 14 in unterschiedliche Garbereiche unterteilt. In diesen Garbereichen können verschiedene Lebensmittel zubereitet werden, wobei es auch möglich ist, die Garbereiche mit verschiedenen Temperaturen zu beheizen, indem der Boden 16 in verschiedene, separat beheizbare Garzonen aufgeteilt ist.

Wie in den Figuren 1 und 2 zu sehen ist, weist die Tiegeltrennvorrichtung 10 einen plattenförmigen Grundkörper 20 auf, der bei der hier gezeigten Ausführungsform im Wesentlichen rechteckig ist. Die der Umfangswand 18 zugeordneten seitlichen Ränder 22 sowie der dem Boden 16 zugeordnete Rand 24 sind im Wesentlichen der Form des Garbehälters 14 angepasst (siehe auch Figur 3).

Der Grundkörper 20 ist aus einem lebensmittelgeeigneten Material, beispielsweise Edelstahl oder einen geeigneten Kunststoff, wie PEEK, LCP oder PPS hergestellt. Auch Kombinationen mehrerer Materialien sind möglich.

An den Rändern 22 und 24 ist eine umlaufende Dichtung 26 vorgesehen, die in dieser Ausführungsform durch einen Schlauch gebildet ist, der an diesen drei Rändern 22, 24 umläuft. Die Dichtung kann aus Silikon, vorzugsweise mit einer Härte von ca. 50ShA, oder einem anderen geeigneten Material bestehen, das die Anforderungen hinsichtlich Elastizität, Wärmebeständigkeit und Lebensmittelechtheit erfüllt. Angeordnet ist die Dichtung in einer Nut oder Aufnahme am Außenrand des Grundkörpers 20.

Die Dichtung weist ein abgeschlossenes Innenvolumen auf und ist über eine Leitung 27 mit einer durch eine Pumpe 30 gebildete Druckbeaufschlagungsvorrichtung 28 verbunden. Mit dieser Druckbeaufschlagungsvorrichtung 28 kann ein Fluid, beispielsweise Umgebungsluft, die über eine Ansaugeinrichtung 29 angesaugt wird, in die Dichtung 26 gepumpt werden, so dass diese in der Ebene des plattenförmigen Grundkörpers 20 von den Rändern 22, 24 vorsteht.

An der Druckbeaufschlagungsvorrichtung 28 ist des Weiteren ein Ablassventil 32 vorgesehen, um den Druck aus der Dichtung 26 abzulassen. Am oberen, freien Rand 34 des Grundkörpers 20 sind zwei Griffelemente 36 vorgesehen, um die Tiegeltrennvorrichtung 10 im Garbehälter 14 platzieren zu können.

Zur Unterteilung des Garbehälters 14 wird die Tiegeltrennvorrichtung 10 in den Garbehälter 14 in der gewünschten Position eingesetzt. Die Rändern 22, 24 bzw. die Dichtung 26 können leicht am Boden 16 bzw. der Umfangswand 18 anliegen. Es ist aber auch möglich, dass zwischen diesen ein kleiner Spalt vorhanden ist.

Anschließend wird über die Pumpe 30 Luft in die Dichtung 26 gepumpt, so dass diese in der Ebene des Grundkörpers 20 über die Ränder 22, 24 hervortritt. Dies führt dazu, dass sich die Tiegeltrennvorrichtung 10 mit der Dichtung 26 gegen die Umfangswand 18 verklemmt. Da sich die Dichtung 26 über die gesamte Länge der Ränder 22, 24 an den Boden 16 bzw. die Umfangswand 18 anliegt, erfolgt zudem eine Abdichtung der Garbereiche zueinander. Dadurch wird der Garbehälter 14 in unterschiedliche Garzonen unterteilt, ohne dass am Garbehälter besondere Vorkehrungen erforderlich sind. Die Tiegeltrennvorrichtung 10 kann also in jedem beliebigen Garbehälter 14 eingesetzt werden, der einen Durchmesser aufweist, der ein Verklemmen der Tiegeltrennvorrichtung 10 an der Umfangswand 18 ermöglicht. Insbesondere muss die Höhe der Tiegeltrennvorrichtung 10 nicht auf die Höhe der Umfangswand 18 des Garbehälters 14 abgestimmt sein.

Die Dichtung 26 kann statt mit einer Pumpe 30 auch mit einer anderen Druckbeaufschlagungsvorrichtung 28 verbunden sein, die geeignet ist, den Druck in der Dichtung 26 zu erhöhen.

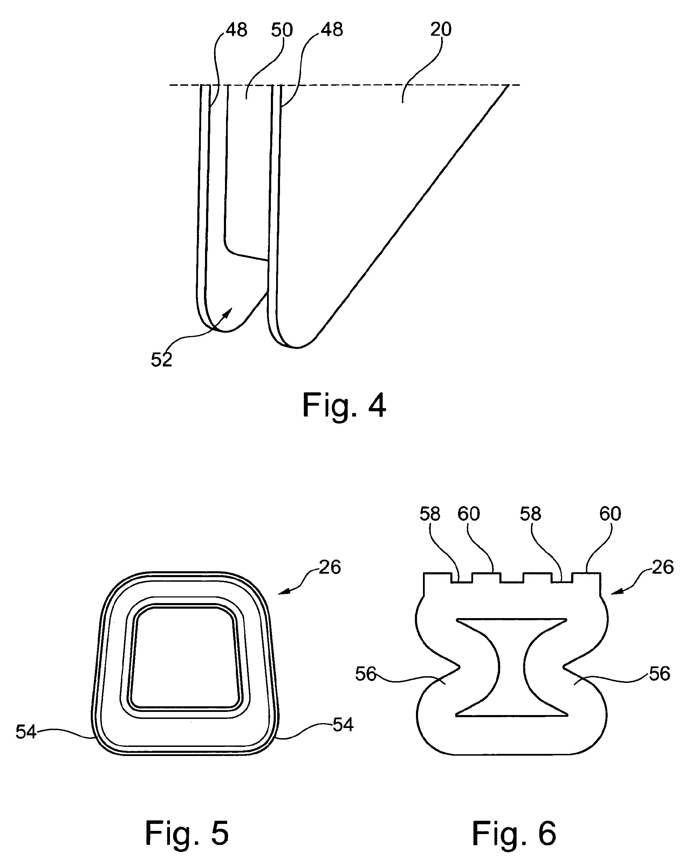

Eine zweite Ausführungsform einer solchen Tiegeltrennvorrichtung ist in Figur 4 gezeigt. Der Grundkörper 20 besteht in dieser Ausführungsform aus zwei parallelen, voneinander beabstandeten Platten 48. Zwischen den Platten 48 ist ein rahmenförmig umlaufendes Element 50 vorgesehen, durch das die Platten 48 parallel zueinander fixiert sind. Durch die Platten 48 und das Element 50 ist eine umlaufende Nut 52 gebildet, in die die Dichtung 26 eingelegt ist. Die Druckbeaufschlagungsvorrichtung 28 ist in einem Innenraum angeordnet, der durch die Platten 48 und das Element 50 gebildet ist.

Der Abstand der Platten 48 liegt zwischen 9mm und 13mm, vorzugsweise 11 mm. Die Dicke der Platten beträgt vorzugsweise 2mm.

Unabhängig von der Ausführungsform ist der Querschnitt der Dichtung 26 so gewählt, dass diese flächig am Grundkörper 20 bzw. in der Nut 52 anliegt.

Die Dichtung 26 kann beispielsweise rund ausgebildet sein, wobei für ein flächiges Anliegen am Grundkörper die Ränder 22, 24 im Querschnitt betrachtet konkav ausgebildet sein müssen.

Ist am Grundkörper 20 eine Nut 52 oder eine andere geeignete Aufnahme für die Dichtung 26 vorgesehen, kann der Querschnitt der Dichtung 26 an den Querschnitt der Nut 52 bzw. der Aufnahme angepasst werden. Insbesondere kann der Querschnitt der Dichtung 26 auch unsymmetrisch sind.

Mögliche Dichtungsformen sind in den Figuren 5 und 6 dargestellt.

Die in Figur 5 gezeigte Dichtung weist einen Querschnitt mit zwei Ecken 54 auf, so dass diese in eine Nut 52 mit rechteckigem Querschnitt bündig eingesetzt werden kann. Der aus der Nut 52 heraus ragende Bereich kann dagegen rund ausgebildet sein, so dass ein besseres Anliegen am Garbehälter 14 möglich ist.

Die in Figur 6 gezeigte Dichtung 26 weist zusätzlich einen Balgbereich 56 auf, so dass diese Dichtung 26 gewissermaßen einen größeren Hub aufweist, sich also weiter vom Grundkörper weg erstrecken kann.

Des Weiteren weist diese Dichtung 26 in der Anlagefläche im Querschnitt mehrere Aussparungen 58 bzw. Vorsprünge 60 auf. In Längsrichtung der Dichtung 26 ergeben diese Vorsprünge 60 Rippen, die eine bessere Abdichtung ermöglichen.

Um eine bessere Abdichtung zu erhalten, können auch andere Strukturen auf der Oberfläche der Dichtung 26 vorgesehen sein. Alternativ kann die Oberfläche auch glatt ausgebildet sein.

Um den Querschnitt der Dichtung 26 an die Form der Nut 52 oder einer Aufnahme anzupassen, können beispielsweise auch an einer runden Dichtung außenseitig zusätzliche Elemente, beispielsweise in Dreiecksform, befestigt werden, beispielweise durch Aufvulkanisieren.

Des Weiteren kann die Wandstärke der Dichtung 26 über den Querschnitt variiert werden. Der Bereich der Dichtung 26, der sich in der Nut 52 befindet, kann beispielsweise eine höhere Wandstärke aufweisen, so dass dieser Bereich steifer ist. Beim Beaufschlagen der Dichtung 26 mit Druck kann so verhindert werden, dass sich dieser Bereich nach außen wölben kann und die Dichtung 26 aus der Nut 52 heraus gedrückt wird.

Auch die Seitenwände der Dichtung 26 können dicker ausgebildet sein, so dass sich die Dichtung 26 nicht in der Ebene der Wandung 18 des Garbehälters ausdehnt, sondern senkrecht zu dieser, also auf die Wandung 18 zu.

Unabhängig von der Form der Dichtung sollte der Abstand zwischen den Rändern 22, 24 des Grundkörpers 20 und der Umfangswand 18 des Garbehälter 14 möglichst gering gehalten werden. Dadurch wird verhindert, dass die Dichtung 26 beim Beaufschlagen mit Druck zu stark gedehnt wird, bevor diese am Garbehälter 14 anliegt. Dies verhindert eine Beschädigung der Dichtung 26. Der Abstand der Ränder 22, 24 zur Umfangswand beträgt idealerweise weniger als 4mm, vorzugsweise weniger als 3mm.

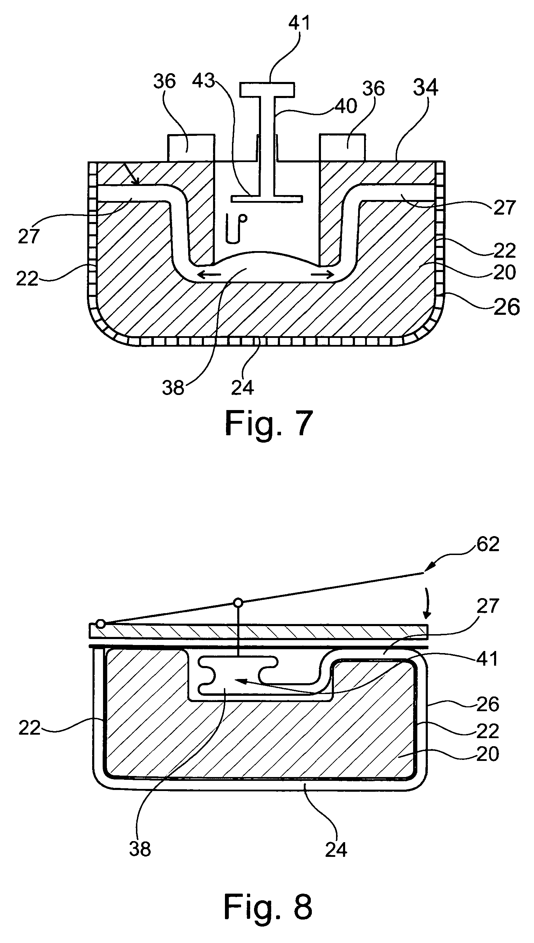

Eine alternative Ausführungsform der beschriebenen Tiegeltrennvorrichtung 10 ist in Figur 7 gezeigt. In dieser Ausführungsform weist die Druckbeaufschlagungsvorrichtung 28 einen kompressiblen Vorratsbehälter 38 auf, der mit einem Fluid gefüllt ist. Der Vorratsbehälter 38 ist über zwei Leitungen 27, die jeweils zu einem seitlichen Rand 22 führen, mit der Dichtung 26 verbunden. Gemeinsam mit der Dichtung 26 und den Leitungen 27 hat der Vorratsbehälter 38 ein abgeschlossenes Innenvolumen.

Das Fluid kann Wasser oder ein lebensmittelgeeignetes Öl sein, beispielsweise Glycerin.

Dem Vorratsbehälter 38 ist ein Stempel 40 zugeordnet, der verschiebbar im Grundkörper 20 gelagert ist. Der Stempel 40 weist einen am freien oberen Rand 34 aus dem Grundkörper 20 ragenden Bedienknopf 41 sowie eine Druckplatte 43 auf, die den Vorratsbehälter 38 zusammendrücken kann.

Nach erfolgter Positionierung der Tiegeltrennvorrichtung 10 im Garbehälter 14 wird der Stempel 40 bezüglich Figur 4 nach unten gegen den Vorratsbehälter 38 gedrückt. Der Vorratsbehälter 38 wird durch die Druckplatte 43 komprimiert, wodurch das Fluid aus dem Vorratsbehälter 38 in die Dichtung 26 gedrückt wird. Die Dichtung 26 wird mit einem Überdruck beaufschlagt und verklemmt die Tiegeltrennvorrichtung 10 im Garbehälter 14.

Um die Tiegeltrennvorrichtung 10 wieder zu demontieren, wird der Stempel 40 nach oben gezogen, wodurch das Fluid in den Vorratsbehälter 38 zurückströmen kann und die Dichtung 26 entlastet wird.

Der Kolben 41 kann beispielsweise auch durch einen Hebelmechanismus 62 bedient werden, wie in Figur 8 gezeigt.

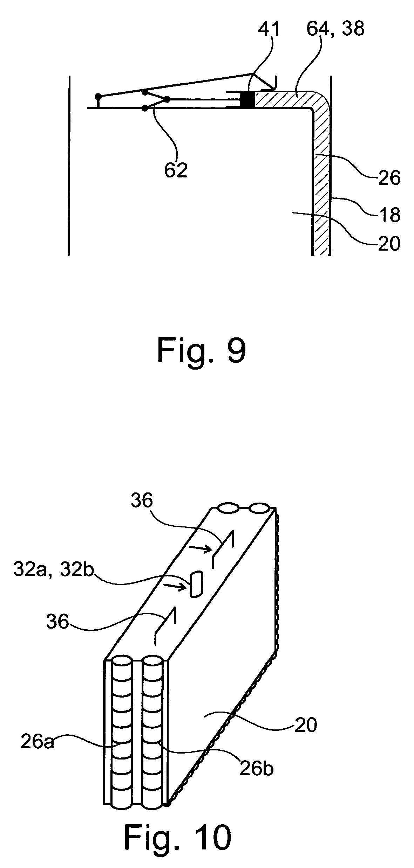

Eine alternative Druckbeaufschlagungsvorichtung 28 ist in Figur 9 gezeigt. Diese weist ein Rohr 64 auf, das an ein Ende der Dichtung angesetzt ist. In diesem Rohr 64 ist ebenfalls ein Kolben 41 vorgesehen, der in Längsrichtung des Rohres 64 verschoben werden kann und somit das Fluid aus dem Rohr 64 in die Dichtung 26 presst. In dieser Ausführungsform dient also das Rohr 64 als Vorratsbehälter 38.

Unabhängig von der Art der Druckbeaufschlagung und des Fluids wird vorzugsweise ein Druck von ca. 2bar in der Dichtung 26 erzeugt.

Bei den in den Figuren 1, 4 und 7 gezeigten Tiegeltrennvorrichtungen 10 ist die Dichtung 26 einteilig ausgebildet, das heißt, diese wird an allen Rändern 22, 24 gleichmäßig mit einem Überdruck beaufschlagt.

Die Dichtung 26 kann davon abweichend aber auch mehrteilig ausgebildet sein, wobei beispielsweise alle Teile dieser Dichtung mit einer gemeinsamen Druckbeaufschlagungsvorrichtung 28 verbunden sind.

Vorzugsweise ist in einer solchen Ausführungsform eine dem Boden 16 des Garbehälters 14 zugeordnete Bodendichtung am unteren Rand 24 sowie an den seitlichen Rändern 22 jeweils eine seitliche Dichtung vorgesehen. Die Teildichtungen können die gleichen Abmessungen aufweisen. Die Bodendichtung und die seitlichen Dichtungen können aber auch verschiedene Dimensionen, insbesondere einen unterschiedlichen Durchmesser, aufweisen, so dass diese unterschiedlich weit über den Grundkörper 20 vorragen können.

Die Dichtungen können untereinander auch verbunden sein, so dass nur eine Leitung 27 von der Druckbeaufschlagungsvorrichtung 28 zur Dichtung 26 erforderlich ist. In einer solchen Ausführungsform ist vorzugsweise zwischen den seitlichen Dichtungen und der Bodendichtung eine Drossel vorgesehen. Die Druckbeaufschlagungsvorrichtung 28 ist mit einer oder beiden seitlichen Dichtungen verbunden. In die Bodendichtung strömt das Fluid über die Drossel. Dadurch wird die Bodendichtung zeitversetzt zu den seitlichen Dichtungen aufgeblasen.

Diese Anordnung hat den Vorteil, dass zuerst die seitlichen Dichtungen aufgeblasen werden, wodurch die Tiegeltrennvorrichtung 10 an der Umfangswand 18 des Garbehälters 14 verklemmt und fixiert wird. Erst nach der Fixierung der Tiegeltrennvorrichtung 10 wird auch die Bodendichtung aufgeblasen und somit die Tiegeltrennvorrichtung 10 zum Boden 16 hin abgedichtet. Würden alle drei Dichtungen gleichzeitig aufgeblasen, würde die Tiegeltrennvorrichtung 10 durch die Bodendichtung nach oben gedrückt werden, wodurch die Abdichtung zum Boden 16 hin nicht zuverlässig gewährleistet wäre.

Alternativ können die Bodendichtung und die seitlichen Dichtungen auch über separate Leitungen mit der Druckbeaufschlagungsvorrichtung 28 verbunden sein. In dieser Ausführungsform kann die Drossel an der Leitung zur Bodendichtung oder unmittelbar an der Druckbeaufschlagungsvorrichtung 28 vorgesehen sein.

Die Bodendichtung und die seitlichen Dichtungen können aber auch jeweils eine separate Druckbeaufschlagungsvorrichtung 28 aufweisen. Die Druckbeaufschlagungsvorrichtungen 28 können beispielsweise manuell bedient werden. Es kann aber auch eine Steuerung vorhanden sein, die die der Bodendichtung zugeordnete Druckbeaufschlagungsvorrichtung 28 zeitversetzt aktiviert.

Eine weitere Ausführungsform einer erfindungsgemäßen Tiegeltrennvorrichtung ist in den Figuren 10 bis 13 gezeigt.

Abweichend von den bisher gezeigten Tiegeltrennvorrichtungen 10, bei denen die Dichtung 26 oder die Dichtungen in einer Ebene angeordnet sind, weist diese Tiegeltrennvorrichtung 10 zwei Dichtungen 26a, 26b auf, die jeweils an den drei Rändern 22, 24 des Grundkörpers 20 und in zwei parallelen Ebenen angeordnet sind.

Es sind also zwei parallele Dichtungen 26a, 26b vorgesehen, die jeweils für sich allein eine Abdichtung und eine Fixierung der Tiegeltrennvorrichtung 10 im Garbehälter 14 bewirken können.

Jede dieser Dichtungen 26a, 26b ist des Weiteren mit einer Druckbeaufschlagungsvorrichtung verbunden, so dass diese separat voneinander mit einem Überdruck beaufschlagt werden können. Ebenso ist jeder dieser Dichtungen 26a, 26b ein Ablassventil zugeordnet, um den Druck aus der Dichtung 26a, 26b ablassen zu können.

Eine solche Tiegeltrennvorrichtung 10 kann, wie die in den Figuren 1, 4 und 7 gezeigte Tiegeltrennvorrichtungen 10, in einen Garbehälter 14 eingesetzt werden, um die Garbereiche voneinander zu trennen. In diesem Fall erfolgt durch die beiden Dichtungen 26a, 26b eine redundante Fixierung und Abdichtung, so dass auch bei einem Defekt einer der Dichtungen 26a, 26b oder, falls zwei separate Druckbeaufschlagungsvorrichtungen verwendet werden, eine zuverlässige Abdichtung der Garbereiche sichergestellt ist.

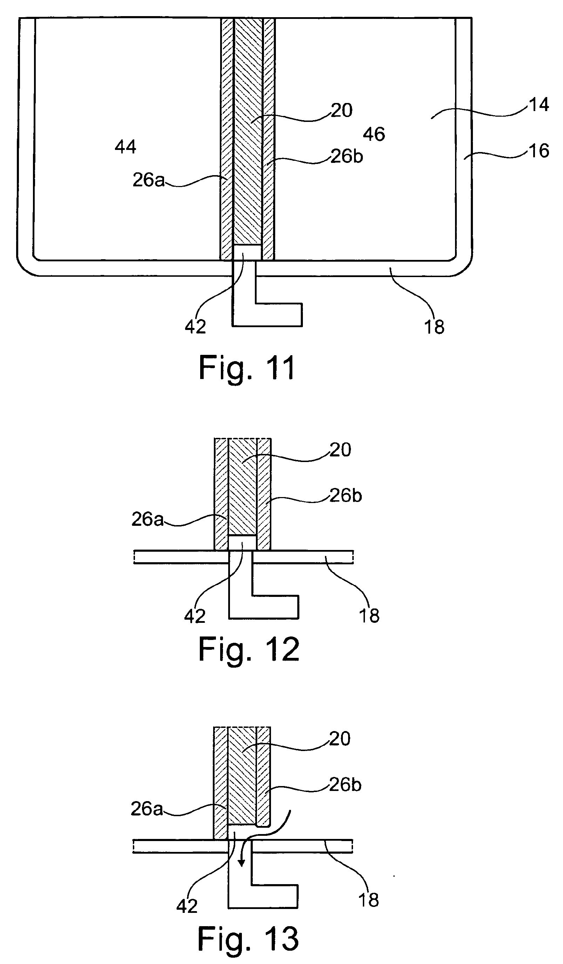

Vorzugsweise wird eine solche Tiegeltrennvorrichtung mit zwei parallelen Dichtungen 26a, 26b aber in einem in Figur 11 dargestellten Garbehälter 14 verwendet.

Dieser Garbehälter 14 entspricht im Wesentlichen dem in Figur 3 gezeigten Garbehälter 14. Wichtig ist, dass eine im Boden 16 angeordnete Ablauföffnung 42 vorgesehen ist, um Flüssigkeiten aus dem Garbehälter 14 abzulassen.

Wie in Figur 11 zu sehen ist, ist der Durchmesser dieser Ablauföffnung 42 kleiner als der Abstand zwischen den beiden Dichtungen 26a, 26b. Die Tiegeltrennvorrichtung 10 ist so im Garbehälter 14 positioniert, dass auf jeder Seite der Ablauföffnung 42 eine der Dichtungen 26a, 26b angeordnet ist. Somit ist der Garbehälter 14 in zwei Garbereiche 44, 46 unterteilt, wobei jede dieser Garbereiche 44, 46 vollständig dicht ist, das heißt, das Gargut kann aus diesen Garbereichen 44, 46 nicht in die Ablauföffnung 42 abfließen (siehe auch Figur 12), wenn beide Dichtungen aktiviert sind.

Um das Gargut aus dem bezüglich Figur 11 rechten Garbereich 46 abzulassen, wird der Druck in der rechten Dichtung 26b reduziert, so dass eine Fluidverbindung zwischen der Garzone 46 und der Ablauföffnung 42 entsteht. Das Gargut kann also aus der zweiten Garzone 46 abgelassen werden.

Ist dieser Vorgang beendet, kann durch die Druckbeaufschlagungsvorrichtung 28b anschließend der Druck in der zweiten Dichtung 26b erhöht und die zweite Garzone 46 wieder zur Ablauföffnung 42 geschlossen werden. Anschließend kann, falls gewünscht, auf gleiche Weise durch eine Druckreduzierung in der ersten Dichtung 26a eine Strömungsverbindung zwischen der ersten Garzone 44 und der Ablauföffnung 42 hergestellt werden.

Unabhängig von der Ausführungsform der Tiegeltrennvorrichtung 10 können unterschiedliche Pumpen 30 für die Druckbeaufschlagungsvorrichtung 28 einer solchen Tiegeltrennvorrichtung 10 verwendet werden. Die Pumpe 30 kann beispielsweise eine elektrische Pumpe mit einem Kompressor sein. Alternativ ist auch eine mechanische Pumpe möglich, die insbesondere einen Luftpumpenhebel aufweist, über den manuell ein Überdruck in der Dichtung 26 erzeugt werden kann.

Abhängig von der Form des Garbehälters 14 sind auch andere Formen der Tiegeltrennvorrichtung 10 möglich. Diese muss lediglich einen Grundkörper aufweisen, der im Wesentlichen an die Querschnittsform des Garbehälters 14 angepasst ist.

Um einen stabilen Halt der Tiegeltrennvorrichtung 10 im Garbehälter 14 sicherzustellen, ist es alternativ oder ergänzend zur Dichtung 26, 26a, 26b auch möglich, dass die Tiegeltrennvorrichtung 10 mit einem Unterdruck an der Umfangswand 18 und/oder am Boden 16 festgesaugt wird. Dazu können zusätzliche Bereiche vorgesehen sein, zwischen denen, wenn diese am Garbehälter 14 anliegen, ein Unterdruck erzeugt werden kann.

Es ist aber auch möglich, dass der Unterdruck bei der in den Figuren 10 bis 13 dargestellten Ausführungsform zwischen den parallel verlaufenden Dichtungen 26a, 26b erzeugt wird. In diesem Fall muss der Zwischenraum zwischen den Dichtungen 26a, 26b in eingesetztem Zustand im Garbehälter 14 in Umfangsrichtung durch zusätzliche Dichtlippen gegen den Garbehälter abgedichtet werden.

Der Unterdruck kann beispielsweise durch eine Pumpe oder durch eine entsprechende Mechanik erzeugt werden.

## Patentansprüche

1. Tiegeltrennvorrichtung (10) zum Unterteilen eines tiegelartigen Garbehälters (14) in unterschiedliche Garbereiche (44, 46), mit einem plattenförmigen Grundkörper (20), mindestens einer Dichtung (26, 26a, 26b), die einem Rand (22, 24) des Grundkörpers (20) zugeordnet ist und ein abgeschlossenes Innenvolumen aufweist, und einer Druckbeaufschlagungsvorrichtung (28), die mit der Dichtung (26, 26a, 26b) verbunden ist.

2. Tiegeltrennvorrichtung nach Anspruch 1, **dadurch gekennzeichnet, dass** die Dichtung (26) ein Schlauch ist.

3. Tiegeltrennvorrichtung nach Anspruch 1 oder 2, **dadurch gekennzeichnet, dass** der Grundkörper (20) rechteckig ist und die Dichtung (26) an drei Rändern (22, 24) angeordnet ist.

4. Tiegeltrennvorrichtung nach einem der vorhergehenden Ansprüche, **dadurch gekennzeichnet, dass** die Druckbeaufschlagungsvorrichtung (28) eine Pumpe (30) ist.

5. Tiegeltrennvorrichtung nach einem der Ansprüche 1 bis 3, **dadurch gekennzeichnet, dass** die Druckbeaufschlagungsvorrichtung (28) ein kompressibler Vorratsbehälter (38) ist.

6. Tiegeltrennvorrichtung nach einem der vorhergehenden Ansprüche, **dadurch gekennzeichnet, dass** die Dichtung (26, 26a, 26b) mit einem inkompressiblen Fluid, insbesondere Öl, insbesondere Glycerin, gefüllt ist.

7. Tiegeltrennvorrichtung nach einem der vorhergehenden Ansprüche, **dadurch gekennzeichnet, dass** ein Ablassventil (32) vorgesehen ist.

8. Tiegeltrennvorrichtung nach einem der vorhergehenden Ansprüche, **dadurch gekennzeichnet, dass** die Dichtung (26) mehrteilig ausgebildet ist.

9. Tiegeltrennvorrichtung nach einem der vorhergehenden Ansprüche, **dadurch gekennzeichnet, dass** an der Dichtung außenseitig Formteile, insbesondere als Eckteile ausgebildete Formteile, insbesondere aus Kunststoff, vorgesehen sind.

10. Tiegeltrennvorrichtung nach Anspruch 8 oder Anspruch 9, **dadurch gekennzeichnet, dass** zwei an gegenüberliegenden Rändern des Grundkörpers (20) vorgesehene seitliche Dichtungen sowie eine Bodendichtung vorgesehen sind.

11. Tiegeltrennvorrichtung nach Anspruch 10, **dadurch gekennzeichnet, dass** eine Drossel zwischen den seitlichen Dichtungen und der Bodendichtung vorgesehen ist, so dass die Bodendichtung zeitversetzt zu den seitlichen Dichtungen aufgeblasen wird.

12. Tiegeltrennvorrichtung nach einem der vorhergehenden Ansprüche, **dadurch gekennzeichnet, dass** zwei parallele Dichtungen (26a, 26b) vorgesehen sind, die insbesondere an drei Rändern (22, 24) des Grundkörpers (20) angeordnet sind.

13. Tiegeltrennvorrichtung nach Anspruch 11, **dadurch gekennzeichnet, dass** jeweils eine Druckbeaufschlagungsvorrichtung (28) für eine Dichtung (26a, 26b) vorgesehen ist.

14. Baugruppe (12) mit einem tiegelartigen Garbehälter (14) und einer Tiegeltrennvorrichtung (10) nach Anspruch 12 oder Anspruch 13, wobei zwei parallele Dichtungen (26a, 26b) vorgesehen sind und der Durchmesser einer Ablauföffnung (42) des Garbehälters (14) kleiner ist als der Abstand der beiden Dichtungen (26a, 26b) voneinander.

## Claims

1. A pan separation device (10) for dividing a pan-like cooking container (14) into different cooking areas (44, 46), comprising a plate-shaped base body (20), at least one seal (26, 26a, 26b) which is associated with an edge (22, 24) of the base body (20) and has a sealed inner volume, and a pressure application device (28) which is connected with the seal (26, 26a, 26b).

2. The pan separation device according to claim 1, **characterized in that** the seal (26) is a hose.

3. The pan separation device according to claim 1 or 2, **characterized in that** the base body (20) is rectangular and the seal (26) is arranged on three edges (22, 24).

4. The pan separation device according to any of the preceding claims, **characterized in that** the pressure application device (28) is a pump (30).

5. The pan separation device according to any of claims 1 to 3, **characterized in that** the pressure application device (28) is a compressible storage container (38).

6. The pan separation device according to any of the preceding claims, **characterized in that** the seal (26, 26a, 26b) is filled with an incompressible fluid, in particular oil, in particular glycerol.

7. The pan separation device according to any of the preceding claims, **characterized in that** a drain valve (32) is provided.

8. The pan separation device according to any of the preceding claims, **characterized in that** the seal (26) has a multipart configuration.

9. The pan separation device according to any of the preceding claims, **characterized in that** shaped parts, in particular shaped parts formed as corner parts, in particular made from plastic, are provided on the outside of the seal.

10. The pan separation device according to claim 8 or claim 9, **characterized in that** two lateral seals provided on opposite edges of the base body (20) and one bottom seal are provided.

11. The pan separation device according to claim 10, **characterized in that** a throttle is provided between the lateral seals and the bottom seal, so that the bottom seal is inflated with a time offset relative to the lateral seals.

12. The pan separation device according to any of the preceding claims, **characterized in that** two parallel seals (26a, 26b) are provided which are arranged in particular on three edges (22, 24) of the base body (20).

13. The pan separation device according to claim 11, **characterized in that** one respective pressure application device (28) is provided for each seal (26a, 26b).

14. An assembly (12) comprising a pan-like cooking container (14) and a pan separation device (10) according to claim 12 or claim 13, wherein two parallel seals (26a, 26b) are provided and the diameter of a drain opening (42) of the cooking container (14) is smaller than the distance of the two seals (26a, 26b) from each other.

## Revendications

1. Dispositif (10) de séparation de creuset pour diviser un récipient de cuisson (14) en forme de creuset en différentes zones de cuisson (44, 46), comportant un corps de base (20) en forme de plaque, au moins un joint (26, 26a, 26b) associé à un bord (22, 24) du corps de base (20) et présentant un volume intérieur renfermé, et un dispositif de pressurisation (28) relié au joint (26, 26a, 26b).

2. Dispositif de séparation de creuset selon la revendication 1, **caractérisé en ce que** le joint (26) est un tuyau.

3. Dispositif de séparation de creuset selon la revendication 1 ou 2, **caractérisé en ce que** le corps de base (20) est rectangulaire et le joint (26) est agencé sur trois bords (22, 24).

4. Dispositif de séparation de creuset selon l'une des revendications précédentes, **caractérisé en ce que** le dispositif de pressurisation (28) est une pompe (30).

5. Dispositif de séparation de creuset selon l'une des revendications 1 à 3, **caractérisé en ce que** le dispositif de pressurisation (28) est un réservoir de stockage compressible (38).

6. Dispositif de séparation de creuset selon l'une des revendications précédentes, **caractérisé en ce que** le joint (26, 26a, 26b) est rempli d'un fluide incompressible, in particulier d'huile, en particulier de glycérine.

7. Dispositif de séparation de creuset selon l'une des revendications précédentes, **caractérisé en ce qu'**il est prévu une soupape de décharge (32).

8. Dispositif de séparation de creuset selon l'une des revendications précédentes, **caractérisé en ce que** le joint (26) est réalisé en plusieurs pièces.

9. Dispositif de séparation de creuset selon l'une des revendications précédentes, **caractérisé en ce que** des pièces moulées, en particulier des pièces moulées réalisées sous forme de pièces de coin, en particulier en matière plastique, sont prévues sur le joint sur la face extérieure.

10. Dispositif de séparation de creuset selon la revendication 8 ou la revendication 9, **caractérisé en ce qu'**il est prévu deux joints d'étanchéité latéraux prévus sur des bords opposés du corps de base (20) ainsi qu'un joint de fond.

11. Dispositif de séparation de creuset selon la revendication 10, **caractérisé en ce qu'**il est prévu un moyen d'étranglement entre les joints latéraux et le joint de fond de sorte que le joint de fond est gonflé avec un décalage temporel par rapport aux joints latéraux.

12. Dispositif de séparation de creuset selon l'une des revendications précédentes, **caractérisé en ce qu'**il est prévu deux joints parallèle (26a, 26b) qui sont en particulier agencés sur trois bords (22, 24) du corps de base (20).

13. Dispositif de séparation de creuset selon la revendication 11, **caractérisé en ce qu'**un dispositif de pressurisation (28) est respectivement prévu pour un joint (26a, 26b).

14. Ensemble (12) présentant un récipient de cuisson (14) en forme de creuset et un dispositif (10) de séparation de creuset selon la revendication 12 ou la revendication 13, deux joints parallèles (26a, 26b) étant prévus, et le diamètre d'un orifice d'évacuation (42) du récipient de cuisson (14) étant inférieur à la distance des deux joints (26a, 26b) l'un de l'autre.
